# EUROPEAN PATENT SPECIFICATION

(11) **EP 0 333 343 B1**
(45) Date of publication and mention of the grant of the patent: **29.09.1993**
(21) Application number: 89302039.6
(22) Date of filing: 01.03.1989
(51) Int. Cl.: A24B 15/32, A24B 15/26, A01N 37/44

(54) **Control of spores on tobacco**
Sporenkontrolle auf Tabak
Contrôle de spores sur le tabac

(30) Priority: 02.03.1988 GB 8804938
(43) Date of publication of application: 20.09.1989
(73) Proprietor: FABRIQUES DE TABAC REUNIES S.A., 2003 Neuchâtel-Serrières (CH)
(72) Inventor: HOFER, Michel Georges, ch - 2208 Les Hauts-Geneveys (CH)
(74) Representative: Marlow, Nicholas Simon

(56) References cited:
- CHEMICAL ABSTRACTS, vol. 102, 1985, page 380, no. 109601x, Columbus, Ohio, US; R.A. PRESTON et al.: "Germination of Bacillus cereus spores: critical control by DL-alanine racemase", & J. GEN. MICROBIOL. 1984, 130(12), 3123-33
- CHEMICAL ABSTRACTS, vol. 90, 1979, page 248, no. 36161a, Columbus, Ohio, US; Y. YASUDA YASAKI et al.: "Inhibition of Bacillus subtilis spore germination by various hydrophobic compounds: demonstration of hydrophobic character of the L-alanine receptor site", & J. BACTERIOL., 1978, 136(2), 484-90
- J.C. LEFFINGWELL et al.: "Tobacco flavoring for smoking products", 1972, page 15, R.J. Reynolds Tobacco Co., Winston-Salem, North Carolina, US

## Description

This invention relates to a method of controlling the microflora present on tobacco.

At present, microbiological activity on tobacco or in the aqueous extracts of tobacco made during the production of so-called "reconstituted tobacco" has been effected by treating the tobacco or extract with an agent which kills microorganisms. One such agent is propyl-4-hydroxybenzoate (propylparaben), another is sorbate. However, it has been observed that, whilst the microorganism population achieved initially after treatment with such agents is low, this initial level is not always maintained over a long period.

It has now been surprisingly observed that the microflora population on tobacco, and hence in tobacco extracts, are principally of the Bacillus family. Bacillus life cycle involves sporulation, dormancy, spore germination, outgrowth and vegetative growth. On tobacco, most of the Bacillus are present in the dormant spore form. Spores are inactive with no detectable metabolic activity. They are resistant to harsh environmental factors such as heat, dessication and chemicals such as sorbate and propylparaben. They germinate in a suitable environment, to give vegetative cells, having proliferation capacity and metabolic activity. It is the products of cell metabolism which produce the characteristic indications of microbiological activity in tobacco.

Tobacco flavouring for smoking products, J.C. Leffingwell et al, 1972, p.15, discloses the use of DL-alanine and L-alanine as tobacco flavourants; both are said to impart a "sweet" flavour to the tobacco smoke taste and aroma.

Chemical Abstracts, vol.90, 1979, p.248, no. 36161a, discloses the inhibition of L-alanine initiated germination of Bacillus subtilis spores by, among other compounds, D-alanine.

According to the present invention there is provided a method of controlling the level of Bacillus spores on tobacco or in tobacco extract liquor comprising treating the tobacco or tobacco extract liquor with L-alanine to cause at least a portion of Bacillus spores to germinate, and then. subjecting the tobacco or tobacco extract liquor to heat to kill the germinated cells.

When L-alanine is applied to whole tobacco, it can conveniently be incorporated into the casing normally applied to tobacco. When L-alanine is applied to an aqueous extract for use in the production of "reconstituted tobacco", it is incorporated into the aqueous phase either before or after extraction of the tobacco.

It may be the case that the temperature to which whole tobacco is subjected during drying or to which tobacco extracts are subjected during the extraction process is sufficiently high to kill the existing vegetative Bacillus cells without further heat treatment.

It may be the case that the temperature to which whole tobacco is subjected during drying or to which tobacco extracts are subjected during the extraction process is sufficiently high to kill the vegetative Bacillus cells without further heat treatment.

The invention will be further described in the following example.

In the example, the spore and vegetative cell populations were measured using a plate count method, in which diluted extracts are spread onto petri dishes. In order to measure spore populations, the extracts were first heated for 12 minutes at 70°C, to kill any vegetative cells present.

### Example

Tobacco was extracted with a 5.10⁻³ M aqueous solution of L-alanine (weight ratio 1:10) at 70°C for 20 minutes, with gentle stirring.

The extract was slowly cooled to 40°C for 20 minutes, and then rapidly heated to 80°C for 10 minutes.

A control extract, containing no L-alanine, was prepared in an identical way.

Samples of the extracts were incubated at 37°C for 24 hours. Measurement of spore and vegetative cell counts (obtained by counting total mesophilic bacteria present and substracting the spore count) were as follows.

| | After extraction | | After cooling | | After heating | |
|---|---|---|---|---|---|---|
| Extract Control | pores 4.5X10⁶ per gram | veg.cell 1X10³ per gram | spores 4X10⁶ per gram | veg.cell 0.5X10⁶ per gram | spores 3.9X10⁶ per gram | veg.cell 2X10³ per gram |
| Trial with L-alanine 5 mM | 4.5x10⁶ per gram | 1X10³ per gram | 1X10⁵ per gram | 4.4X10⁶ per gram | 5X10⁴ per gram | 1X10³ per gram |
| The levels in the untreated tobacco were: Bacillus spores: 4.5.10⁷ per gram Vegetative : 4.7.10⁷ per gram | | | | | | |

From the table it can be seen that the levels of both spores and vegetative cells present in the newly extracted liquors are the same for the control and the treated extract. However, after the cooling stage, it is apparent that most of the spores in the treated extract have germinated to vegetative cells. These are killed in the heat treatment stage, resulting in a much lower bacterial population in the treated extract than in the control sample.

It has been found that particularly good results are achieved if the L-alanine concentration is 2.10⁻²M, or higher.

The tobacco is extracted with aqueous L-alanine preferably at a temperature between 70°C and 80°C and is then incubated, preferably at a temperature between 30°C and 45°C. It is believed that germination is activated during extraction, by the 'heat shock' imparted to the spores by the hot aqueous L-alanine solution, and that the spores lose their heat resistance during incubation. A relatively short incubation, of perhaps 5 minutes, may well be sufficient to allow heat treatment at about 60°C to kill all or most of the Bacillus cells present on the tobacco.

## Claims

1. A method of controlling the level of Bacillus spores on tobacco or in tobacco extract liquor comprising treating the tobacco or tobacco extract liquor with L-alanine to cause at least a portion of Bacillus spores to germinate, and then subjecting the tobacco or tobacco extract liquor to heat to kill the germinated cells.

2. A method according to claim 1 in which tobacco is extracted with an aqueous solution of L-alanine to form an aqueous extract.

3. A method according to claim 2, in which the concentration of L-alanine in the solution is at least 5.10⁻³M.

4. A method according to claim 2 or 3 in which the concentration of L-alanine in the solution is at least 2.10⁻²M.

5. A method according to claim 2,3 or 4, in which the extraction takes places at a first temperature, the resulting extract is held at second, lower, temperature to allow germination of the Bacillus spores and is then heated to a third temperature to kill the germinated cells.

6. A method according to any of claims 2 to 5 in which the aqueous solution of L-alanine is at between 70°C and 80°C during the extraction step.

7. A method according to any of claims 2 to 6 in which the extract is cooled to between 30°C and 45°C.

8. A method according to any preceding claim in which the tobacco or tobacco extract liquor is subjected to a temperature of at least 60°C to kill the germinated cells.

9. A method according to any preceding claim, in which the tobacco or tobacco extract liquor is subjected to a temperature of no more than 80°C to kill the germinated cells.

## Patentansprüche

1. Verfahren zur Kontrolle der Menge der Bazillensporen auf Tabak oder in Tabakextraktbrühe, umfassend die Behandlung von Tabak oder Tabakextraktbrühe mit L-Alanin, um zu verursachen, dass mindestens ein Teil der Bazillensporen keimt, und anschliessendes Unterwerfen des Tabaks oder der Tabakextraktbrühe einer Wärmebehandlung, um die gekeimten Zellen abzutöten.

2. Verfahren gemäss Anspruch 1, worin der Tabak mit einer wässrigen Lösung von L-Alanin extrahiert wird um einen wässrigen Extrakt zu bilden.

3. Verfahren gemäss Anspruch 2, worin die Konzentration von L-Alanin in der Lösung mindestens 5x10⁻³ M ist.

4. Verfahren gemäss Anspruch 2 oder 3, worin die Konzentration von L-Alanin in der Lösung mindestens 2x10⁻² M ist.

5. Verfahren gemäss Anspruch 2, 3 oder 4, worin die Extraktion bei einer ersten Temperatur stattfindet, wobei der erhaltene Extrakt bei einer zweiten tiefen Temperatur gehalten wird um die Bazillensporen keimen zu lassen und dann auf eine dritte Temperatur erwärmt wird, um die gekeimten Zellen abzutöten.

6. Verfahren gemäss einem der Ansprüche 2 bis 5, worin die wässrige Lösung von L-Alanin während der Extraktionsstufe eine Temperatur zwischen 70 und 80°C aufweist.

7. Verfahren gemäss einem der Ansprüche 2 bis 6, worin der Extrakt auf eine Temperatur zwischen 30 bis 45°C abgekühlt wird.

8. Verfahren gemäss einem der vorhergehenden Ansprüche, worin der Tabak oder die Tabakextraktbrühe einer Temperatur von mindestens 60°C unterworfen wird, um die gekeimten Zellen abzutöten.

9. Verfahren gemäss einem der vorhergehenden Ansprüche, worin der Tabak oder die Tabakextraktbrühe einer Temperatur von nicht mehr als 80°C unterworfen wird, um die gekeimten Zellen abzutöten.

## Revendications

1. Procédé de contrôle du niveau des spores de Bacillus sur le tabac ou dans le liquide extrait du tabac, comprenant le traitement du tabac ou du liquide extrait du tabac à la L-alanine pour provoquer la germination d'au moins une partie des spores de Bacillus, et ensuite la soumission du tabac ou du liquide extrait du tabac à un échauffement pour tuer les cellules germées.

2. Procédé selon la revendication 1, dans lequel on extrait le tabac avec une solution aqueuse de L-alanine pour former un extrait aqueux.

3. Procédé selon la revendication 2, dans lequel la concentration de la L-alanine dans la solution est d'au moins 5,10⁻³M.

4. Procédé selon la revendication 2 ou la revendication 3, dans lequel la concentration de la L-alanine dans la solution est d'au moins 2,10⁻²M.

5. Procédé selon la revendication 2, la revemdication 3 ou la revendication 4, dans lequel l'extraction s'effectue à une première température, l'extrait qui en résulte étant maintenu à une deuxième température plus basse que la première pour permettre la germination des spores de Bacillus et étant ensuite chauffé jusqu'à une troisième température pour tuer les cellules germées.

6. Procédé selon l'une quelconque des revendications 2 à 5, dans lequel la solution aqueuse de L-alanine se situe entre 70°C et 80°C durant l'étape d'extraction.

7. Procédé selon l'une quelconque des revendications 2 à 6, dans lequel l'extrait est refroidi jusqu'à une température se situant entre 30°C et 45°C.

8. Procédé selon l'une quelconque des revendications précédentes, dans lequel le tabac ou le liquide extrait du tabac est soumis à une température d'au moins 60°C pour tuer les cellules germées.

9. Procédé selon l'une quelconque des revendications précédentes, dans lequel le tabac ou le liquide extrait du tabac est soumis à une température inférieure à 80°C pour tuer les cellules germées.
